# EUROPEAN PATENT APPLICATION

(11) **EP 4 325 521 A1**
(43) Date of publication of application: **21.02.2024**
(21) Application number: 21932442.3
(22) Date of filing: 30.06.2021
(51) Int. Cl.: G21C 15/18

(54) **EMERGENCY RESIDUAL HEAT REMOVAL AND WATER REPLENISHING SYSTEM FOR NUCLEAR POWER PLANT**

(30) Priority: 26.03.2021 CN 202110330768
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: ZHANG, Feng, Shenzhen, Guangdong 518124 (CN); GONG, Aicheng, Shenzhen, Guangdong 518124 (CN); SHE, Yingjuan, Shenzhen, Guangdong 518124 (CN); SONG, Yujun, Shenzhen, Guangdong 518124 (CN); XU, Naisheng, Shenzhen, Guangdong 518124 (CN); YANG, Jinchun, Shenzhen, Guangdong 518124 (CN); CHEN, Chuyuan, Shenzhen, Guangdong 518124 (CN); DU, Xiaodong, Shenzhen, Guangdong 518124 (CN); LIU, Lijun, Shenzhen, Guangdong 518124 (CN); HE, Yingyong, Shenzhen, Guangdong 518124 (CN); LI, Qing, Shenzhen, Guangdong 518124 (CN); LIU, Xiaohua, Shenzhen, Guangdong 518124 (CN); LUAN, Luan, Shenzhen, Guangdong 518124 (CN); ZUO, Yongde, Shenzhen, Guangdong 518124 (CN); SHENG, Gang, Shenzhen, Guangdong 518124 (CN)
(74) Representative: Greaves Brewster LLP
(86) International application number: PCT/CN2021/103419
(87) International publication number: WO 2022/198826

(57) **Abstract**

The present invention provides an emergency residual heat removal and water replenishing system for a nuclear power plant including: three columns of mutually independent cooling series (10), an ultra-large-sized modular cooling water tank (40), a set of control and alarm systems, and an auxiliary monitoring instrument, wherein the water capacity of the ultra-large-sized modular cooling water tank (40) at least can meet the removal of heat of a primary loop within 72 hours after an accident occurs, and the cooling water tank (40) is connected to an emergency water supply system and a spent fuel pool, so as to replenish the emergency water supply system and the spent fuel pool with water when needed; the three columns of cooling series (10) share the ultra-large-sized modular cooling water tank (40) as a final heat trap of condensers (14) of the three columns of cooling series (10), thereby realizing the passive residual heat removal at secondary sides of steam generators (90) when the emergency water supply system is not available; and the bottom of the ultra-large-sized modular cooling water tank (40) is provided with sinking compartments, and the condensers (14) of the three columns of cooling series (10) are respectively located in different sinking compartments. The emergency residual heat removal and water replenishing system for a nuclear power plant can completely meet the requirement for removing heat released by nuclear fuel within 72 hours, thereby improving the capability and safety of the nuclear power plant in coping with an accident condition.

## Description

### FIELD OF THE INVENTION

The present invention generally relates to nuclear power plants and, more particularly, relates to an emergency residual heat removal and water replenishing system for a nuclear power plant.

### BACKGROUND OF THE INVENTION

One of the main problems of nuclear power safety is to ensure the release of heat from nuclear fuel under any conditions. Part of the nuclear fuel is involved in the nuclear reaction in the reactor, and part of the nuclear fuel is spent fuel stored in the spent fuel pool.

The nuclear fuel in the reactor still generates residual heat when the reactor is shut down. After the reactor is shut down, the residual heat is initially removed by the steam generator. When the secondary loop can no longer operate, the residual heat is removed by the residual heat removal system to ensure the cooling of the reactor. When the normal water supply system is not available, the emergency water supply system will be activated, to provide emergency water supply to the steam generator to meet the functional requirements of the steam generator to continuously remove the residual heat. However, when the water supply of the emergency water supply system is insufficient or failure, the residual heat cannot be removed in time, thereby endangering the nuclear safety.

The nuclear fuel in the spent fuel pool will continue to generate decay heat. The decay heat is removed mainly via the reactor pool and the fuel pool cooling and treating system. Once the system fails, the water level of the spent fuel pool cannot be guaranteed, and there may be a risk of fuel assemblies being exposed and radioactive materials not being contained.

Third generation nuclear power plants require 72-hour heat release from nuclear fuel, to prevent further deterioration of the accident. What is needed, therefore, is to provide an emergency residual heat removal and water replenishing system for a nuclear power plant which can ensure nuclear safety.

### SUMMARY OF THE INVENTION

One object of the present invention is to provide an emergency residual heat removal and water replenishing system for a nuclear power plant, to meet the requirement for removing heat released by nuclear fuel within 72 hours, provide the secondary side of the steam generator with passive residual heat removal, replenish water for the emergency water supply system and the spent fuel pool, and improve the capability and safety of the nuclear power plant in coping with an accident condition.

According to one embodiment of the present invention, an emergency residual heat removal and water replenishing system for a nuclear power plant comprises three columns of mutually independent cooling series, an ultra-large-sized modular cooling water tank, a set of control and alarm systems, and an auxiliary monitoring instrument, wherein a water capacity of the ultra-large-sized modular cooling water tank at least can meet the removal of heat of a primary loop within 72 hours after an accident occurs, and the cooling water tank is connected to an emergency water supply system and a spent fuel pool, so as to replenish the emergency water supply system and the spent fuel pool with water when needed; each cooling series corresponds to a steam generator, the three columns of cooling series share the ultra-large-sized modular cooling water tank as a final heat trap of condensers of the three columns of cooling series, thereby realizing passive residual heat removal at secondary sides of steam generators when the emergency water supply system is not available; and a bottom of the ultra-large-sized modular cooling water tank is provided with sinking compartments, and the condensers of the three columns of cooling series are respectively located in different sinking compartments.

According to one aspect of the present invention, when the emergency water supply system is available, the heat is removed by the emergency water supply system; when the water capacity of the emergency water supply system is insufficient, the emergency water supply system is supplied by the cooling water tank to ensure continuous heat removal for 72 hours; when power failure in the whole plant, failure of backup diesel engine and failure of emergency water supply system occur, and the whole plant loses the residual heat removal capacity of the active core, the secondary side heat removal of the steam generator is directly realized through the three columns of cooling series in a passive manner, thereby establishing a continuous and stable natural cycle to remove the heat of the primary loop within 72 hours after the accident to prevent core deterioration.

According to one aspect of the present invention, the three columns of cooling series are identical, and can perform residual heat conduction when at least two cooling series are available, thereby having sufficient redundancy; inlet and outlet of each cooling series connecting the steam generator is provided with two isolation valves for executing isolation function, to have sufficient redundancy; the three columns of the cooling series are arranged in the safety plant on two sides of the reactor, each cooling series comprises a steam line, condenser and a condensing reflux line connected in series, the condenser is immersed in the cooling water tank and used to direct heat from the secondary side of the steam generator to the water in the cooling water tank, the water in the water tank is heated, boiled and evaporated, and the heat is ultimately transferred to the final heat trap of the atmosphere.

According to one aspect of the present invention, the steam line of the cooling series is connected to a steam outlet line of the steam generator, the steam line is provided with two steam inlet valves as redundancy, wherein a first steam inlet valve is a steam inlet isolation valve directly welded on a nozzle of the steam outlet line, the nozzle is located between a main steam system safety valve and a main steam isolation valve, the steam inlet isolation valve is an electric gate valve, a second steam inlet valve is an inlet regulating globe valve, which is arranged near the steam inlet isolation valve and is an electric control stop valve;
the condenser of the cooling series has a C-type structure of stainless steel, and is installed at the bottom of the ultra-large-sized modular cooling water tank and is immersed in the water;

According to one aspect of the present invention, an outlet of the condensing reflux line of the cooling series is connected to an emergency water supply line of the emergency water supply system, with an access point being located between the inverse stop valve and the steam generator; the condensing reflux line is provided with a condensing reflux isolation valve located outside the containment and a condensing backflow check valve located inside the containment, and the condensing backflow check valve can be maintained open in a low flow state of a long-term of the system operation condition.

According to one aspect of the present invention, the condenser is arranged at a high position in the cooling series as a cold core, a height difference between a condenser outlet nozzle and a feed water inlet nozzle of the steam generator is not less than 5m, so as to meet the requirements of the natural circulation capacity of the cooling series; in the direction of the fluid, the steam line of the cooling series maintains an upward trend, and a highest point of entire circulation loop is on the steam line in front of an inlet of the condenser, a low point should be avoided in a middle of the circulation loop, the condensing reflux line goes down before going up, and a lowest point of the condensing reflux line is below a nozzle position where the condensing reflux line enters the steam generator, so that a U-shaped structure is formed at the bottom of the whole condensing reflux line, to ensure formation of water column in the condensing reflux line for stable operation of the system.

According to one aspect of the present invention, the cooling water tank is arranged above an outer side of the containment of the nuclear power plant and is used for storing water to realize heat discharge to the atmosphere; the cooling water tank has an annular structure, which is divided into a plurality of water tank units by a plurality of partition walls, and the adjacent water tank units form a series structure by connecting upper and the lower connecting ports, the three condensers of the three columns of cooling series are respectively installed in three different water tank units, the water tank unit where the condenser is located is provided with a sinking compartment, and the condenser is located in a sinking compartment and immerged in the water; the ultra-large-sized modular cooling water tank is a concrete steel lined structure with a lined steel cladding surface to prevent leakage and maintain water quality.

According to one aspect of the present invention, the ultra-large-sized modular cooling water tank is provided with a water supply line, a drainage line, a steam discharge port, a water tank water level monitoring instrument, a water temperature monitoring instrument, and a pressure control device, the water supply line is equipped with a normal water supply interface and a temporary water supply interface, which can accept the water supply from a dematerialized water distribution system under normal operation condition, and can accept the water supply from temporary water source if necessary after an accident, the drainage line is used for tank maintenance or drainage when the water quality in the water tank does not meet the requirements, the drainage line is also connected to a gathering pipe of the emergency water supply system and the spent fuel pool, to replenish water for the two systems if necessary; the top of the cooling water tank is provided with a top plate, the top plate is provided with a steam discharge port, the water surface of the water tank is at least 1m away from the steam discharge port at the top of the water tank, the steam discharge port is provided with a shutter which is used for discharging a large amount of steam in the water tank after the system is put into operation under accident conditions, so that the heat is eventually released into the atmosphere.

According to one aspect of the present invention, the emergency residual heat removal and water replenishing system for a nuclear power plant further comprises a mixing device; the mixing device comprises a mixing intake line, a circulation pump) and a circulation reflux water line which are sequentially connected, the circulation reflux water line is divided into two semi-circular ring tubes at the top of the cooling water tank, each semi-circular ring tube is provided with a plurality of spray heads, and the positions of the spray heads respectively correspond to a plurality of water tank units of the cooling water tank, the intake line of the mixing device takes water from a nearest drainage line of the cooling tank, which passes through the circulation pump and is conveyed to the top of the cooling water tank through the circulation reflux water line, the spray head is sprayed into each water tank unit through the semi-circular ring tube, to realize the mixing of the water in the cooling water tank to enhance the heat exchange cycle, the circulation reflux water line is connected with the normal and post-accident water supply line for supplying water to the cooling water tank through the water supply line.

According to one aspect of the present invention, the emergency residual heat removal and water replenishing system for a nuclear power plant further comprises a recirculating dosing and heating device, the recirculating dosing and heating device is used for dosing and heating water in a cooling water tank, the recirculating dosing and heating device comprises a dosing box, an electrical heater and associated valves and lines, the dosing box and the electric heater are arranged on the circulation reflux water line in parallel, during the operation of the power plant, dosing cycle operation shall is carried out as required, and the circulation pump and the electric heater need normal power supply.

According to one aspect of the present invention, the control and alarm system adopts automatic control and manual control and can be started with one click in a main control room, during normal operation of the power plant, the emergency residual heat removal and water replenishing system for a nuclear power plant is in standby condition; when it is necessary for the emergency residual heat removal and water replenishing system for a nuclear power plant to continuously remove the primary loop heat, an automatic start-up condition is that, the water level of three steam generators at wide range is below a set value at the same time, and the three columns of emergency water supply systems operates at low flow beyond a specified time.

According to one aspect of the present invention, the control and alarm system is provided with modular high water level of cooling water tank, low water level of water tank, high temperature of water tank, high pressure between inlet isolation valves, high nitrogen pressure of pipe in standby state, low nitrogen pressure of pipe in standby state, high water level of backwater section liquid column, low water level of backwater section liquid column and valve position monitoring signal alarm.

Compared with the prior art, the emergency residual heat removal and water replenishing system for a nuclear power plant of the present invention can replenish water for the emergency water supply system and the spent fuel pool, and can realize passive residual heat removal of the secondary side of the steam generator when the emergency water supply system is not available, so as to completely meet the requirement for removing heat released by nuclear fuel within 72 hours, thereby improving the capability and safety of the nuclear power plant in coping with an accident condition.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 is a schematic diagram of an emergency residual heat removal and water replenishing system for a nuclear power plant of the present invention, wherein Fig. 1-1 to Fig. 1-3 are enlarged views of part I, II, and III in Fig. 1, and Fig. 1 is divided into part I, II and III via two dotted lines A-A and B-B to distinguish the enlarged areas;
Fig. 2 is a top view of an ultra-large-sized modular cooling water tank in Fig. 1; and
Fig. 3 is a sectional view of the cooling water tank along a 0-180°line in Fig. 2.

### DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

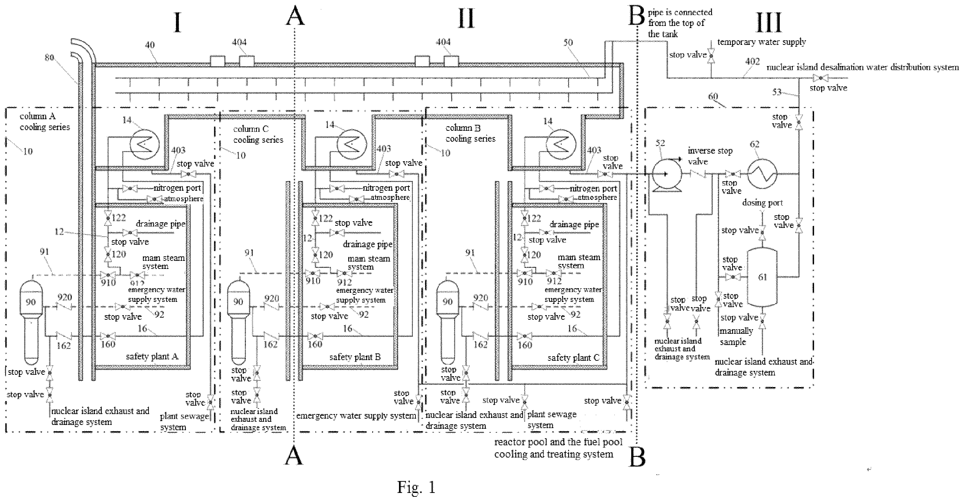

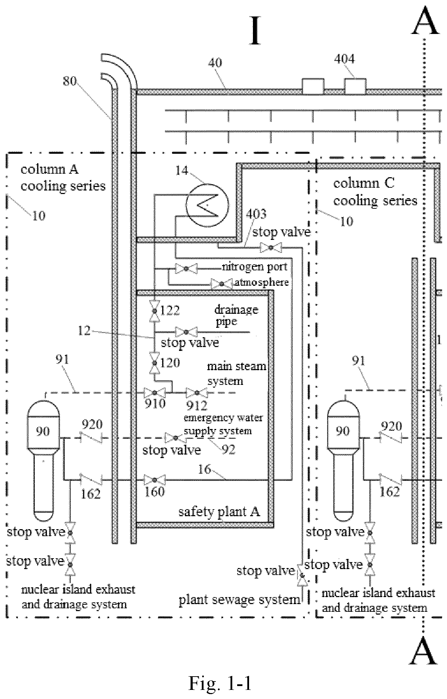

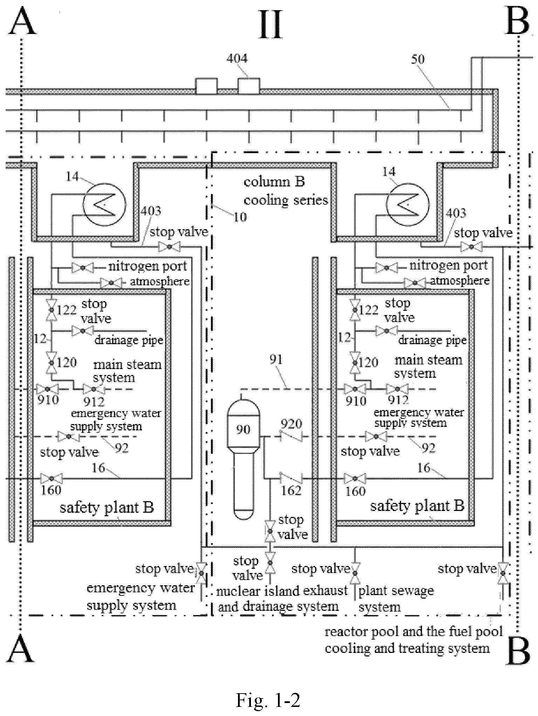

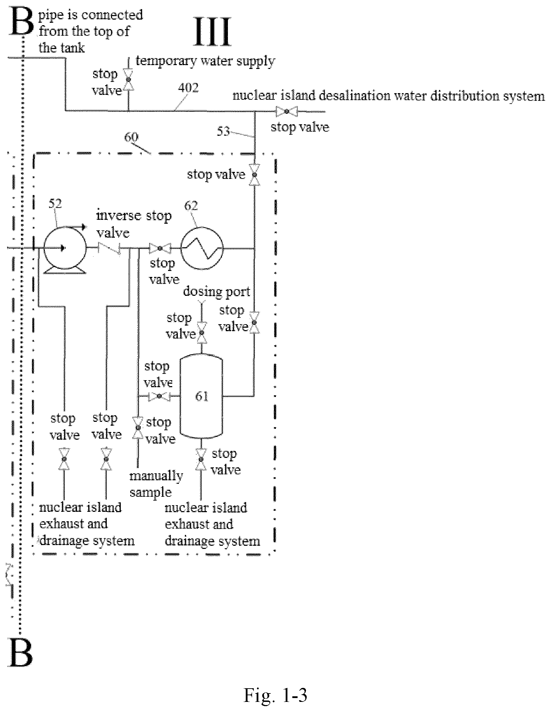

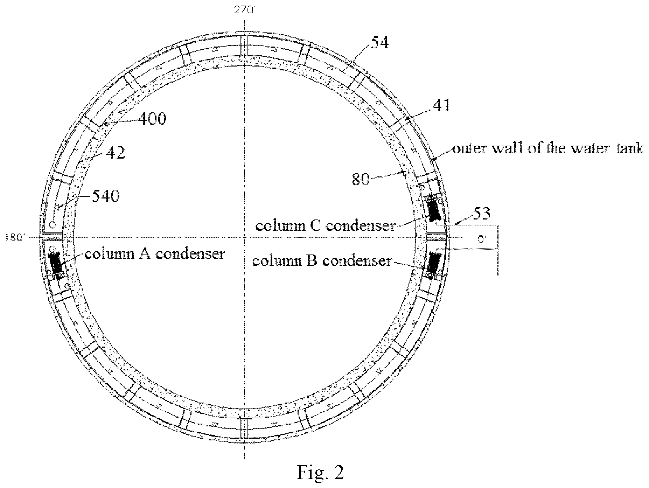

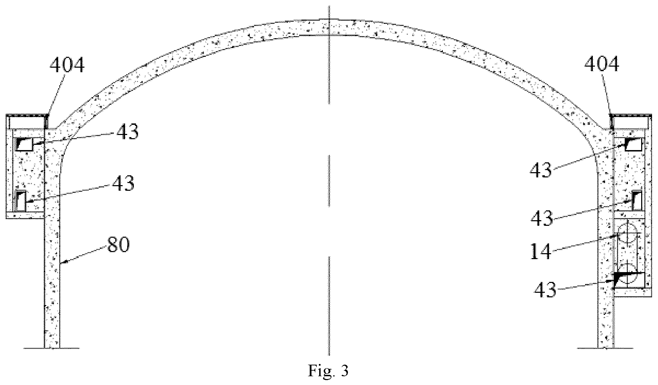

Referring to Figs. 1 to 3, the emergency residual heat removal and water replenishing system for a nuclear power plant of the present invention includes three columns of mutually independent cooling series 10, a ultra-large-sized modular cooling water tank 40, a mixing device 50, a recirculating dosing and heating device 60, a set of control and alarm systems and an auxiliary monitoring instrument. The ultra-large-sized modular cooling water tank 40 replenishes the emergency water supply system and the spent fuel pool, and provides passive residual heat discharge to the secondary side of the steam generator through the three columns of cooling series 10.

Cooling series A, B and C 10 are identical and mutually independent from each other. Each cooling series 10 corresponds to a steam generator 90, which can perform residual heat conduction when at least two cooling series 10 are available, thereby having sufficient redundancy. Each cooling series 10 includes a steam line 12, a condenser 14, a condensing reflux line 16, and other corresponding pipes and valves. The inlet and outlet of each cooling series 10 connecting the steam generator 90 is provided with two isolation valves for executing isolation function, so as to have sufficient redundancy. Three columns of cooling series 10 sharing a ultra-large-sized modular cooling water tank 40 as the final heat trap for three condensers 14, steam from any steam generator 90 enters the condenser for cooling through the steam line 12 of the corresponding cooling series 10, the condensate water is re-injected into the steam generator 90 through the condensing reflux line 16, to form a closed residual heat removal loop.

The steam outlet pipe 91 of the steam generator 90 connected to the main steam system is provided with a main steam system safety valve 910 and a main steam isolation valve 912 outside the containment 80. The steam line 12 is connected to the steam outlet line 91 of the steam generator 90 and the access point is located between the main steam system safety valve 910 and the main steam isolation valve 912. The steam line 12 is provided with two steam inlet valves 120,122 as redundancy, wherein the first steam inlet valve is a steam inlet isolation valve 120, the steam inlet isolation valve 120 is directly welded on the nozzle of the steam outlet pipeline 91. The nozzle is located between the main steam system safety valve 910 and the main steam isolation valve 912. The steam inlet isolation valve 120 is an electric gate valve. The second steam inlet valve is an inlet regulating globe valve 122, which is arranged near the steam inlet isolation valve 120 and is an electric control stop valve.

Condenser 14, as a key equipment of natural circulation, condenses steam into water in the condensing tube and transfers heat to the storage water of the ultra-large-sized modular cooling water tank 40 outside the condensing tube. The condenser 14 has a C-type structure of stainless steel, and is installed at the bottom of the cooling water tank 40 and is immersed in the water.

An inverse stop valve 920 is arranged in the emergency water supply line 92 of the emergency water supply system connecting to the steam generator 92 in the containment 80. The outlet of the condensing reflux line 16 is connected to the emergency water supply line 92 of the emergency water supply system, with the access point being located between the inverse stop valve 920 and the steam generator 90. The condensing reflux line 16 is provided with a condensing reflux isolation valve 160 located outside the containment 80 and a condensing backflow check valve 162 located inside the containment 80. The condensing backflow check valve 162 is located close to the steam generator 90 and can be maintained open in the low flow state of the long-term of the system operation condition.

In addition, each cooling series 10 is also connected with a pipe water filling interface, a drainage interface, an exhaust interface, a nitrogen interface and a nitrogen pressure monitoring instrument, a pressure monitoring instrument and a discharge interface between isolation valves, a loop liquid level measuring instrument, and a flow and temperature meter for testing.

The cooling water tank 40 is an ultra-large-sized modular cooling water tank, whose water capacity can meet the heat removal of the primary loop within 72 hours after the accident. The cooling water tank 40 is arranged above the outer side of the containment 80 of the nuclear power plant and is used for storing water to realize heat discharge to the atmosphere. The cooling water tank 40 has an annular structure, which is divided into a number of water tank units 42 by a number of partition walls 41, and the adjacent water tank units 42 form a series structure by connecting the upper and the lower connecting ports 43. The number of tank units 42 and partition 41 as shown is 20. The three condensers 14 of the three columns of cooling series 10 are respectively installed in different water tank units 42. The water tank unit 42 where the condenser 14 is located is provided with a sinking compartment, and the condenser 14 is located in a sinking compartment and immerged in the water.

The ultra-large-sized modular cooling water tank 40 is a concrete steel lined structure with a lined steel cladding surface 400 to prevent leakage and maintain water quality. The lined steel cladding surface 400 of each tank unit 42 is prefabricated into independent individual modules at the manufacturing plant, is transported and lifted as a whole, and made of layered concrete after in-situ and tailor-welded at the nuclear power plant.

The ultra-large-sized modular cooling water tank 40 is provided with a water supply line 402, a drainage line 403, a steam discharge port 404, a water tank water level monitoring instrument, a water temperature monitoring instrument, a high-level water supply interface and a pressure balance pipe.

The water supply line 402 is equipped with normal and temporary water supply interface, which can accept the water supply from the demineralized water distribution system under normal operation condition, and can accept the water supply from temporary water source if necessary after an accident.

The drainage line 403 is used for tank maintenance or drainage when the water quality in the water tank does not meet the requirements. The drainage line 403 is also connected to the gathering pipe of the emergency water supply system and the spent fuel pool, to replenish water for the two systems if necessary.

The top of the cooling water tank 40 is provided with a top plate, the top plate is provided with a steam discharge port 404, and the steam discharge port 404 is provided with a shutter, which is used for discharging a large amount of steam in the water tank after the system is put into operation under accident conditions, so that the heat is eventually released into the atmosphere.

The water level and temperature monitoring instruments include the water tank level meter, the water tank thermometer, and the loop water level meter of each cooling series. One end of the water tank meter is connected to the bottom of the water tank, and the other end is connected to the air space of the upper part of the water tank. The water tank thermometer is connected on both sides of the water tank in the room near the external wall of the water tank, and is far away from the water intake and backwater outlet of the circulating pipe. One end of each loop water level meter is connected to the top pipe section of the steam pipe before the inlet of condenser 14, and the other end is connected to the outlet pipe of condenser 14.

The mixing device 50 is used for mixing the water in the cooling water tank 40 to enhance the heat exchange cycle. The mixing device 50 includes a mixing intake line, a circulation pump 52 and a circulation reflux water line 53 which are sequentially connected. The circulation reflux water line 53 is divided into two semi-circular ring tubes 54 at the top of the cooling water tank 40. Each semi-circular ring tube 54 is provided with a number of spray heads 540 and the positions of the spray heads 540 respectively correspond to a number of water tank units 42 of the cooling water tank 40. The intake line of the mixing device 50 takes water from the nearest drainage line 403 of the cooling tank 40, which passes through the circulation pump 52 and is conveyed to the top of the cooling water tank 40 through the circulation reflux water line 53. The spray head 540 is sprayed into each water tank unit 42 through the semi-circular ring tube 54, to realize the mixing of the water in the cooling water tank 40 to enhance the heat exchange cycle. The circulation reflux water line 53 is connected with the normal and post-accident water supply line 402 for supplying water to the cooling water tank 40 through the water supply line 402.

The recirculating dosing and heating device 60 is used for dosing and heating water in a cooling water tank 40. The recirculating dosing and heating device 60 includes a dosing box 61, an electrical heater 62 and associated valves and lines. The dosing box 61 and the electric heater 62 are arranged on the circulation reflux water line 53 in parallel. During the operation of the power plant, dosing cycle operation shall be carried out as required. Before starting the circulation pump 52, the operator manually opens the drainage isolation valve on the drainage line 403 of the cooling water tank 40, to confirm that the isolation valve on the circulation reflux water line 53 is opened and the isolation valve of normal and post-accident water supply line is closed. After the circulation pump 52 is started, the chemical agent in the dosing box 61 enters each water tank unit 42 along with the water tank medium. After running for a period of time, the water quality at the outlet of the circulation pump52 is sampled and monitored. After the chemical agent reaches the predetermined value, the circulation pump 52 is stopped. The circulation pump 52 and the electric heater 62 need normal power supply, and both need long-term continuous operation when the temperature is low in winter. The circulation pump 52 needs intermittent operation at other times, and the electric heater 62 does not need operation. For the safety of personnel, the surface temperature of the equipment or pipe personnel can reach and heat preservation is needed to prevent personnel burns.

The emergency residual heat removal and water replenishing system for a nuclear power plant of the present invention supplies water for the emergency water supply system and the spent fuel pool through an ultra-large-sized modular cooling water tank 40, a passive residual heat removal is provided to the secondary side of the steam generator through the cooling series 10, without the need for replenishing and heating at the same time. In particular, the emergency residual heat removal and water replenishing system for a nuclear power plant of the present invention mainly has the following functions:
1) When the reactor pool and the spent fuel pool cooling and treating system is abnormal, the emergency residual heat removal and water replenishing system for a nuclear power plant of the present invention is used as a backup means for supplying water to the spent fuel pool, and the spent fuel pool is replenished with water through the cooling water tank 40;
2) After the emergency water supply system is started, the emergency residual heat removal and water replenishing system for a nuclear power plant of the present invention, as a backup means of the emergency water supply system, removes the residual heat of the reactor core after the accident via the replenishment water of the emergency water supply system from the cooling water tank 40, to physically separate from the emergency water supply system and avoid being affected by the same initial event or the consequences of the event;
3) When the emergency water supply system is not available, the emergency residual heat removal and water replenishing system is directly connected to the secondary side of the steam generator, the steam generated by the steam generator 90 is cooled by the water in the cooling water tank 40 through the condenser 14, and the condensate water is re-fed into the steam generator 90 to form a passive cooling circuit with the steam generator 90, so as to discharge the residual heat in the reactor core of the primary loop. The emergency residual heat removal and water replenishing system of the present invention can simultaneously maintain the water level of the steam generator 90 and avoid the evaporation of the steam generator 90. The isolation function of the steam generator 90 is performed to limit the radioactive release in case of a steam generator heat transfer pipe rupture accident.

The operation principle and the specific arrangement of the emergency residual heat removal and water replenishing system for a nuclear power plant of the present invention will be detailed as following.

When the emergency residual heat removal and water replenishing system for a nuclear power plant of the present invention performs the function of passive residual heat removal, the condenser 14 is immersed in the cooling water tank 40 to conduct heat from the secondary side of the steam generator 90 to the water tank. When the emergency residual heat removal and water replenishing system for a nuclear power plant of the present invention is put into operation, the steam in the condenser tube condenses into water, the heat is transferred to the water tank, and the water in the water tank is heated, boiled and evaporated. The heat is ultimately transferred to the final heat trap in the atmosphere.

The water capacity of the ultra-large-sized modular cooling water tank 40 can meet the maximum water demand under the accident condition, and meet the requirements of heat discharge in the primary loop within 72 hours after the accident. The water surface of the water tank shall be at least 1 m away from the steam discharge port 404 at the top of the water tank. In order to avoid affecting the heat exchange effect, the condenser 14 is kept at a certain distance from the structure of the cooling water tank 40. Under a complete loss of water supply accident, after the emergency residual heat removal and water replenishing system for a nuclear power plant of the present invention is put into operation, the water in the sinking compartment of the condenser heats up to boiling, the water vapor in the cooling water tank 40 may be discharged from the shutters through openings in the upper portion of partition 41, while water between partition 41 may also flow to the condenser sinking compartment through openings in the bottom portion of partition wall 41. Therefore, during the operation of the emergency residual heat removal and water replenishing system, the water capacity of the cooling water tank 40 will not expose the condenser 14 caused by insufficient replenishment.

In order to achieve passive natural circulation, the condenser 14 as a cold core is arranged at a high position in the cooling series 10. The height difference between the condenser outlet nozzle and the feed water inlet nozzle of the steam generator 90 shall not be less than 5m, so as to meet the requirements of the natural circulation capacity of the cooling series 10. In the direction of the fluid, the steam line 12 of the cooling series 10 maintains an upward trend, and the highest point of the entire circulation loop is on the steam line in front of the inlet of the condenser 14, which is slightly higher than the condenser inlet, a low point should be avoided in the middle of the circulation loop. The condensing reflux line 16 should go down before going up, and the lowest point of the condensing reflux line 16 should be below the nozzle position where the condensing reflux line 16 enters the steam generator 90, so that a U-shaped structure is formed at the bottom of the whole condensing reflux line 16, to ensure the formation of water column in the condensing reflux line 16 for the stable operation of the system.

The three columns of the cooling series 10 of the emergency residual heat removal and water replenishing system for a nuclear power plant of the present invention is arranged in the safety plant on two sides of the reactor. One column is arranged on the side of the safety plant A, and the other two columns are arranged on the side of safety plant B. Each cooling series 10 is arranged as following:
1) The steam inlet valve of the steam line 12 is arranged at the main steam valve station of the safety plant;
2) Cooling water tank 40 is arranged around the outer wall of the containment 80, the bottom of the tank is positioned above the nozzle of the emergency water supply system of the steam generator 90, and the condenser 14 is immersed in a sinking compartment at the bottom of the cooling water tank 40;
3) The condensing reflux isolation valve 160 is located near the containment penetration of the emergency water supply line, and the condensing backflow check valve 162 is located near the nozzle of the emergency water supply system of the steam generator 90 in the containment 80;
4) The condensing reflux line 16 is connected to the pipe of emergency water supply system from below or obliquely below, to ensure that the hot fluid is above and the cold fluid is below in the standby state, so as to reduce the convective heat transfer;
5) The drainage pipe 121 connected between the steam inlet isolation valve 120 and the inlet regulating globe valve 122 is arranged at an inclined angle and connected to the downstream of the drainage pipe 121. There should not be a U-shaped or inverted U-shaped arrangement on the drainage pipe 121 to avoid forming a water seal;
6) The water intake of the recirculating dosing and heating device 60 should be located at the bottom of the cooling water tank 40 on one side of the room, and the backwater outlet should be located at the top of the cooling water tank 40 on the other side of the room, so as to enhance the circulation mixing effect.

The operation and control mode of the emergency residual heat removal and water replenishing system for a nuclear power plant of the present invention will be described in detail as following.

### 1. power plant normal operation condition

During normal operation of the power plant, the emergency residual heat removal and water replenishing system for a nuclear power plant is in standby condition, the steam inlet isolation valve 120, the inlet regulating globe valve 122, and the containment outer condensing reflux isolation valve 160 in the condensing reflux line 16 of the three columns of cooling series 10 are all in closed positions. The steam line 12 of the cooling series 10 is covered with nitrogen gas, and the pressure in the steam line 12 is maintained slightly above atmospheric pressure via pressure instrument monitoring. The discharge valve is opened when the pressure exceeds the set value due to the accumulation of the medium, to drain the accumulated media. The accumulation of media is monitored through a pressure instrument between the steam inlet isolation valve 120 and the inlet regulating globe valve 122.

During the normal operation of the power plant, the water quality of the cooling water tank 40 is regularly monitored by sampling, and when necessary, the operation of dosing cycle or water exchange is carried out.

### 2. power plant accident condition

### 1) all loss of water supply accidents

When the main water supply of the three steam generators 90 are completely lost, the water capacity of the secondary loop will be lost, and the water level of the three steam generators 90 will be lowered. When the water level of the steam generator 90 is below the set value (the emergency water supply system is not available), an emergency shutdown of the reactor is triggered and results in tripping of the steam turbine. The steam generated by the secondary loop is discharged into the atmosphere through a steam atmospheric emission system.

When the wide range water level of the steam generator is reduced to a set value, and the flow rate of the emergency water supply system is low for 60 seconds, the emergency residual heat removal and water replenishing system for a nuclear power plant of the present invention is started, to remove the residual heat of the reactor core via three columns of cooling series 10. After the system was connected for a period of time, the pressure and temperature of the primary loop and the secondary loop will start to drop, and the accident can be controlled.

### 2) power failure in the whole plant and failure of emergency water supply system accident

When power failure in the whole plant occurs, the main pump loses power supply and its speed slows down. When the low-low speed of the main pump is reached, emergency shutdown of the reactor is triggered and results in tripping of the steam turbine. The steam generated by the secondary loop is discharged into the atmosphere through a steam atmospheric emission system.

When wide range water level of the steam generator is reduced to a set value, and the flow rate of the emergency water supply system is low for 60 seconds, the emergency residual heat removal and water replenishing system for a nuclear power plant of the present invention is started, to remove the residual heat of the reactor core via three columns of cooling series 10. At this time, the primary loop heat is already low. Once the system is connected, the pressure and temperature of the primary loop and the secondary loop will start to drop, and the accident can be controlled.

### 3) emergency water supply system is available but need long-term replenishing

In all conditions where heat needs to be removed through the emergency water supply system and the steam atmospheric exhaust system, even taking into account the need for core decay heat, heat dissipation by a running main pump, and heat conduction by primary loop water bodies and equipments, the capacity of the emergency water supply tank can only meet the heat conduction demand of 24 hours after the accident. In the long-term stage from 24h to 72h after the accident, the cooling water tank 40 of the emergency residual heat removal and water replenishing system for a nuclear power plant of the present invention will resupply water to the emergency replenishing water tank.

### 4) when the reactor pool and the fuel pool cooling and treating system is abnormal

When the reactor pool and the fuel pool cooling and treating system is abnormal, and the mechanical system of the cooling loop is completely invalid, the heat of the spent fuel pool is derived via replenishment evaporation mode. In the long-term stage, the emergency residual heat removal and water replenishing system for a nuclear power plant of the present invention replenishes water to the spent fuel pool, to ensure the replenishment amount within 72 hours after the accident.

### 3. system control

The control design of the emergency residual heat removal and water replenishing system for a nuclear power plant of the present invention mainly aims at the accident working condition of the nuclear power plant. The working condition is the accident condition that the emergency water supply system needs to be put into operation to remove the heat of the primary loop and the emergency water supply system fails. Under these conditions, the heat of the primary loop can be discharged continuously by the emergency residual heat removal and water replenishing system for a nuclear power plant.

When it is necessary for the emergency residual heat removal and water replenishing system for a nuclear power plant to continuously discharge the primary loop heat, the automatic start-up condition is that, the water level of three steam generators 90 at wide range is below the set value at the same time, and the three columns of emergency water supply systems operates at low flow beyond the specified time.

In the control of the emergency residual heat removal and water replenishing system for a nuclear power plant, manual control can be used in addition to the automatic control of the system starting.

The emergency residual heat removal and water replenishing system for a nuclear power plant can be activated with one click in the main control room. The first steam inlet isolation valves 120 of the three columns of the cooling series 10 of the emergency residual heat removal and water replenishing system for a nuclear power plant open simultaneously, the second inlet regulating valves 122 open simultaneously after delay, and the condensing reflux isolation valve 160 opens after delay.

### 4. alarm setting

In order to meet the functional requirements of the system and facilitate the operator to operate the system, the control and alarm system is provided with modular high water level of cooling water tank, low water level of water tank, high temperature of water tank, high pressure between inlet isolation valves, high nitrogen pressure of pipe in standby state, low nitrogen pressure of pipe in standby state, high water level of backwater section liquid column, low water level of backwater section liquid column and valve position monitoring signal alarm, as follows:

### a) ultra-large-sized modular cooling water tank

When the ultra-large-sized modular cooling water tank 40 is filled for the first time, or filled again after the subsequent maintenance and drainage, it will stop filling water manually after the water level reaches a high set value. After the accident, when the water level of the water tank continues to drop to a low set value and triggers the alarm, the temporary water supply interface is opened. The water supply pipe is closed when the water level rises above the set value. When the water level of the water tank is higher than the set value and needs to be drained, the drainage pipe can be opened on the spot and closed after the water level is restored to the set value.

The cooling water tank is provided with temperature monitoring instruments, and temperature higher than a set value will trigger the alarm. For instance, when the circulation pump 52 is running, the circulating pump 52 needs to stop for cooling, and the low-temperature water in the nuclear island desalination water distribution system is used to replace the stored water in the cooling tank 40.

### b) nitrogen pipe

During the standby period of the system, cover the steam line 12 of the three columns of cooling series 10 with nitrogen, and use pressure instruments to monitor the nitrogen pressure: if the nitrogen pressure is higher than the set value, trigger the alarm, open the exhaust outlet to discharge the nitrogen to reduce the nitrogen pressure; if the nitrogen pressure is lower than the set value trigger the alarm, remind the operator to open the isolation valve on the nitrogen circuit to fill nitrogen.

### c) steam inlet between valves

During the standby period of the system, in order to prevent the first steam inlet valve from steam leakage and condensation drain accumulation, pressure instruments are installed between the two steam inlet valves to monitor the pressure. When the pressure is higher than a set value to trigger the alarm, the drainage line 121 between two steam inlet valves is started, to drain to the main steam system.

### d) liquid column of backwater section

When the emergency residual heat removal and water replenishing system for a nuclear power plant of the present invention is in normal standby, the condensing reflux line 16 of the three columns of cooling series 10 and the inner side of the condenser pipe are in a state of being filled with water. The liquid column measurement in the backwater section can reflect the water filling condition in the condensing reflux line 16 and the condenser 14.

### e) valve position

The emergency residual heat removal and water replenishing system for a nuclear power plant of the present invention is also provided with an isolation valve position monitoring alarm. Without an open command, if the isolation valve is not fully closed, the alarm signal will be triggered. In the case of an open command (manual or automatic), if the isolation valve is not fully opened, after a specified time delay, the alarm will be triggered.

According to the above description, the emergency residual heat removal and water replenishing system for a nuclear power plant of the present invention does not run immediately in accident conditions, but serves as a backup means of the emergency water supply system. The design concept of defense-in-depth and redundancy greatly improves the ability and safety of the nuclear power plants to cope with accident conditions:
When the emergency water supply system is available, the emergency water supply system will remove the heat. When the emergency water supply system is started, the water capacity of the water tank of the emergency water supply system can only supply for 24 hours. When the water capacity of the emergency water supply system is insufficient, the cooling water tank 40 of the emergency residual heat removal and water replenishing system for a nuclear power plant of the present invention supplies water to the emergency water supply system as a backup means for the heat removal of the secondary side of the steam generator of the emergency water supply system, to remove the residual heat of the reactor core in 24h to 72h after the accident, playing the role of defense in depth and redundancy and effectively ensuring the continuous heat removal for 72 hours;
When the reactor pool and the fuel pool cooling and treating (PTR) system is abnormal and cannot supply water for the spent fuel in time, or the loss of water accident of the spent fuel pool occurs, the cooling water tank 40 of the emergency residual heat removal and water replenishing system for a nuclear power plant of the present invention replenishes water for the spent fuel pool, acting as a backup means of supplying water for the spent fuel pool for the removal of the decay heat of the fuel assemblies after a spent fuel pool accident, so as to ensure the safety of the 10-metre water layer radiation protection barrier by maintaining the water level of the spent fuel pool to avoid the exposure of the fuel assemblies and the exclusion of the radioactive substances;
In the case of "power failure in the whole plant, failure of backup diesel engine and failure of emergency water supply system", when the whole plant loses the residual heat removal capacity of the active core, the secondary side heat removal of the steam generator is directly provided by the present invention, to provide a passive means of residual heat removal for the nuclear power plant so that the system can establish a continuous and stable natural cycle when a serious accident occurs in the nuclear power plant, and to remove the heat of the primary loop within 72 hours after the accident to prevent core deterioration.

The emergency residual heat removal and water replenishing system for a nuclear power plant of the present invention realizes the heating and water replenishing functions of the emergency residual heat removal and water replenishing system for a nuclear power plant, is conducive to heat exchange and water quality control, and facilitates modular construction of the nuclear power plant. Compared with the prior art, the present invention has at least the following advantages:
1) The emergency residual heat removal and water replenishing system for a nuclear power plant with new design of the present invention to provide in-depth defense and redundancy protection for the third generation nuclear power plants to achieve 72-hour continuous heat release from nuclear fuel in reactors and decay heat release from spent fuel in spent fuel pools through replenishment of emergency water supply systems and spent fuel pools, as well as direct secondary heat steam generator.
2) The emergency residual heat removal and water replenishing system for a nuclear power plant of the present invention has an ultra-large-sized modular cooling water tank whose water capacity can meet the maximum water demand under the accident condition and meet the requirements of heat discharge in the primary circuit within 72 hours after the accident. The cooling water tank 40 is composed of 20 modules for the convenience of modular construction. The condenser 14 of the cooling series 10 is configured to immerse in the cooling water tank 40 to realize isolation from the secondary side of the steam generator.
3) The emergency residual heat removal and water replenishing system for a nuclear power plant of the present invention has a mixing device 50, which can mix the water in the cooling water tank 40 to enhance the heat exchange cycle.
4) The emergency residual heat removal and water replenishing system for a nuclear power plant of the present invention has a recirculating dosing and heating device 60, which can dosing and heating the water in the cooling water tank 40.
5) The emergency residual heat removal and water replenishing system for a nuclear power plant of the present invention has reasonable arrangement, which can realizes passive natural circulation in the heat discharge process of the primary loop.
6) The emergency residual heat removal and water replenishing system for a nuclear power plant of the present invention adopts automatic control and manual control, and the operation of the emergency residual heat removal and water replenishing system for a nuclear power plant can be started with one click in the main control room.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. An emergency residual heat removal and water replenishing system for a nuclear power plant, **characterized in that**, the emergency residual heat removal and water replenishing system for a nuclear power plant comprises three columns of mutually independent cooling series (10), an ultra-large-sized modular cooling water tank (40), a set of control and alarm systems, and an auxiliary monitoring instrument, wherein a water capacity of the ultra-large-sized modular cooling water tank (40) at least can meet the removal of heat of a primary loop within 72 hours after an accident occurs, and the cooling water tank (40) is connected to an emergency water supply system and a spent fuel pool, so as to replenish the emergency water supply system and the spent fuel pool with water when needed; each cooling series (10) corresponds to a steam generator (90), the three columns of cooling series (10) share the ultra-large-sized modular cooling water tank (40) as a final heat trap of condensers (14) of the three columns of cooling series (10), thereby realizing passive residual heat removal at secondary sides of steam generators (90) when the emergency water supply system is not available; and a bottom of the ultra-large-sized modular cooling water tank (40) is provided with sinking compartments, and the condensers (14) of the three columns of cooling series (10) are respectively located in different sinking compartments.

2. The emergency residual heat removal and water replenishing system for a nuclear power plant of claim 1, **characterized in that**, when the emergency water supply system is available, the heat is removed by the emergency water supply system; when the water capacity of the emergency water supply system is insufficient, the emergency water supply system is supplied by the cooling water tank (40) to ensure continuous heat removal for 72 hours; when power failure in the whole plant, failure of backup diesel engine and failure of emergency water supply system occur, and the whole plant loses the residual heat removal capacity of the active core, the secondary side heat removal of the steam generator (90) is directly realized through the three columns of cooling series (10) in a passive manner, thereby establishing a continuous and stable natural cycle to remove the heat of the primary loop within 72 hours after the accident to prevent core deterioration.

3. The emergency residual heat removal and water replenishing system for a nuclear power plant of claim 1, **characterized in that**, the three columns of cooling series (10) are identical, and can perform residual heat conduction when at least two cooling series (10) are available, thereby having sufficient redundancy; inlet and outlet of each cooling series (10) connecting the steam generator (90) is provided with two isolation valves for executing isolation function, to have sufficient redundancy; the three columns of the cooling series (10) are arranged in the safety plant on two sides of the reactor, each cooling series (10) comprises a steam line (12), condenser (14) and a condensing reflux line (16) connected in series, the condenser (14) is immersed in the cooling water tank (40) and used to direct heat from the secondary side of the steam generator (90) to the water in the cooling water tank (40), the water in the water tank is heated, boiled and evaporated, and the heat is ultimately transferred to the final heat trap of the atmosphere.

4. The emergency residual heat removal and water replenishing system for a nuclear power plant of claim 3, **characterized in that**, the steam line (12) of the cooling series (10) is connected to a steam outlet line (91) of the steam generator (90), the steam line (12) is provided with two steam inlet valves (120,122) as redundancy, wherein a first steam inlet valve is a steam inlet isolation valve (120) directly welded on a nozzle of the steam outlet line (91), the nozzle is located between a main steam system safety valve (910) and a main steam isolation valve (912), the steam inlet isolation valve (120) is an electric gate valve, a second steam inlet valve is an inlet regulating globe valve (122), which is arranged near the steam inlet isolation valve (120) and is an electric control stop valve;
the condenser (14) of the cooling series (10) has a C-type structure of stainless steel, and is installed at the bottom of the ultra-large-sized modular cooling water tank (40) and is immersed in the water;
an outlet of the condensing reflux line (16) of the cooling series (10) is connected to an emergency water supply line (92) of the emergency water supply system, with an access point being located between the inverse stop valve (920) and the steam generator (90); the condensing reflux line (16) is provided with a condensing reflux isolation valve (160) located outside the containment (80) and a condensing backflow check valve (162) located inside the containment (80), and the condensing backflow check valve (162) can be maintained open in a low flow state of a long-term of the system operation condition.

5. The emergency residual heat removal and water replenishing system for a nuclear power plant of claim 3, **characterized in that**, the condenser (14) is arranged at a high position in the cooling series (10) as a cold core, a height difference between a condenser outlet nozzle and a feed water inlet nozzle of the steam generator (90) is not less than 5m, so as to meet the requirements of the natural circulation capacity of the cooling series (10); in the direction of the fluid, the steam line (12) of the cooling series (10) maintains an upward trend, and a highest point of entire circulation loop is on the steam line in front of an inlet of the condenser (14), a low point should be avoided in a middle of the circulation loop, the condensing reflux line (16) goes down before going up, and a lowest point of the condensing reflux line (16) is below a nozzle position where the condensing reflux line (16) enters the steam generator (90), so that a U-shaped structure is formed at the bottom of the whole condensing reflux line (16), to ensure formation of water column in the condensing reflux line (16) for stable operation of the system.

6. The emergency residual heat removal and water replenishing system for a nuclear power plant of claim 1, **characterized in that**, the cooling water tank (40) is arranged above an outer side of the containment (80) of the nuclear power plant and is used for storing water to realize heat discharge to the atmosphere; the cooling water tank (40) has an annular structure, which is divided into a plurality of water tank units (42) by a plurality of partition walls (41), and the adjacent water tank units (42) form a series structure by connecting upper and the lower connecting ports (43), the three condensers (14) of the three columns of cooling series (10) are respectively installed in three different water tank units (42), the water tank unit (42) where the condenser (14) is located is provided with a sinking compartment, and the condenser (14) is located in a sinking compartment and immerged in the water; the ultra-large-sized modular cooling water tank (40) is a concrete steel lined structure with a lined steel cladding surface (400) to prevent leakage and maintain water quality.

7. The emergency residual heat removal and water replenishing system for a nuclear power plant of claim 6, **characterized in that**, the ultra-large-sized modular cooling water tank (40) is provided with a water supply line (402), a drainage line (403), a steam discharge port (404), a water tank water level monitoring instrument, a water temperature monitoring instrument, and a pressure control device, the water supply line (402) is equipped with a normal water supply interface and a temporary water supply interface, which can accept the water supply from a demineralized water distribution system under normal operation condition, and can accept the water supply from temporary water source if necessary after an accident, the drainage line (403) is used for tank maintenance or drainage when the water quality in the water tank does not meet the requirements, the drainage line (403) is also connected to a gathering pipe of the emergency water supply system and the spent fuel pool, to replenish water for the two systems if necessary; the top of the cooling water tank (40) is provided with a top plate, the top plate is provided with a steam discharge port (404), the water surface of the water tank is at least 1m away from the steam discharge port (404) at the top of the water tank, the steam discharge port (404) is provided with a shutter which is used for discharging a large amount of steam in the water tank after the system is put into operation under accident conditions, so that the heat is eventually released into the atmosphere.

8. The emergency residual heat removal and water replenishing system for a nuclear power plant of anyone of claims 1 to 7, **characterized in that**, the emergency residual heat removal and water replenishing system for a nuclear power plant further comprises a mixing device (50); the mixing device (50) comprises a mixing intake line, a circulation pump (52) and a circulation reflux water line (53) which are sequentially connected, the circulation reflux water line (53) is divided into two semi-circular ring tubes (54) at the top of the cooling water tank (40), each semi-circular ring tube (54) is provided with a plurality of spray heads (540), and the positions of the spray heads (540) respectively correspond to a plurality of water tank units (42) of the cooling water tank (40), the intake line of the mixing device (50) takes water from a nearest drainage line (403) of the cooling tank (40), which passes through the circulation pump (52) and is conveyed to the top of the cooling water tank (40) through the circulation reflux water line (53), the spray head (540) is sprayed into each water tank unit (42) through the semi-circular ring tube (54), to realize the mixing of the water in the cooling water tank (40) to enhance the heat exchange cycle, the circulation reflux water line (53) is connected with the normal and post-accident water supply line (402) for supplying water to the cooling water tank (40) through the water supply line (402).

9. The emergency residual heat removal and water replenishing system for a nuclear power plant of anyone of claims 1 to 7, **characterized in that**, the emergency residual heat removal and water replenishing system for a nuclear power plant further comprises a recirculating dosing and heating device (60), the recirculating dosing and heating device (60) is used for dosing and heating water in a cooling water tank (40), the recirculating dosing and heating device (60) comprises a dosing box (61), an electrical heater (62) and associated valves and lines, the dosing box (61) and the electric heater (62) are arranged on the circulation reflux water line (53) in parallel, during the operation of the power plant, dosing cycle operation shall is carried out as required, and the circulation pump (52) and the electric heater (62) need normal power supply.

10. The emergency residual heat removal and water replenishing system for a nuclear power plant of anyone of claims 1 to 7, **characterized in that** the control and alarm system adopts automatic control and manual control and can be started with one click in a main control room, during normal operation of the power plant, the emergency residual heat removal and water replenishing system for a nuclear power plant is in standby condition; when it is necessary for the emergency residual heat removal and water replenishing system for a nuclear power plant to continuously remove the primary loop heat, an automatic start-up condition is that, the water level of three steam generators 90 at wide range is below a set value at the same time, and the three columns of emergency water supply systems operates at low flow beyond a specified time.

11. The emergency residual heat removal and water replenishing system for a nuclear power plant of anyone of claims 1 to 7, **characterized in that** the control and alarm system is provided with modular high water level of cooling water tank, low water level of water tank, high temperature of water tank, high pressure between inlet isolation valves, high nitrogen pressure of pipe in standby state, low nitrogen pressure of pipe in standby state, high water level of backwater section liquid column, low water level of backwater section liquid column and valve position monitoring signal alarm.
